# EUROPEAN PATENT APPLICATION

(11) **EP 4 394 637 A1**
(43) Date of publication of application: **03.07.2024**
(21) Application number: 22878683.6
(22) Date of filing: 23.07.2022
(51) Int. Cl.: G06F 21/64, G06F 21/62, G06F 21/33, H04L 9/32

(54) **ELECTRONIC DEVICE FOR PROCESSING MULTI-SIGNED APK FILE, AND OPERATING METHOD THEREFOR**

(30) Priority: 06.10.2021 KR 20210132499
(71) Applicant: Samsung Electronics Co., Ltd., Suwon-si, Gyeonggi-do 16677 (KR)
(72) Inventor: LEE, Seyeong, Suwon-si Gyeonggi-do 16677 (KR); KIM, Moonkyung, Suwon-si Gyeonggi-do 16677 (KR); OH, Myeongjin, Suwon-si Gyeonggi-do 16677 (KR); SEO, Dongwook, Suwon-si Gyeonggi-do 16677 (KR); LEE, Yeongsu, Suwon-si Gyeonggi-do 16677 (KR)
(74) Representative: Appleyard Lees IP LLP
(86) International application number: PCT/KR2022/010844
(87) International publication number: WO 2023/058860

(57) **Abstract**

An electronic device for processing a multi-signed APK file, and an operating method therefor are disclosed. The disclosed electronic device comprises a processor and a memory including at least one instruction executable by the processor, wherein, if the at least one instruction is executed by the processor, the processor can receive an APK file for which a multi-signature is requested, verify a signing block included in the APK file, determine a new signing block to be added to the APK file according to the multi-signature if verification of the signing block is completed, reconfigure the APK file on the basis of the new signing block and insert the new signing block into the reconfigured APK file.

## Description

### Technical Field

Various embodiments of the present disclosure relate to an electronic device for processing a multi-signed Android Package (APK) file and an operation method thereof.

### Background Art

An application to run on the Android operating system (OS) is distributed in the form of an Application Package (APK) file, and an APK file may be based on the ZIP file format. Therefore, methods of signing an APK file may also employ a signing mechanism using the ZIP file format. The signing method provided by Android may ensure the integrity of an APK file itself.

### Disclosure of the Invention

### Technical Solutions

In the current Android system, APK signing methods support only one signature. Since areas of an APK file are linked in the form of a linked list, attempting to change the APK file by inserting a value between areas may break the integrity of the file itself. Additionally, if a value is inserted into the end portion of the APK file, the APK file format itself may be destroyed. Multi-signing may be necessary for a multi-party collaboration process, but there may be several restrictions on including a plurality of APK signing blocks in an APK file for such multi-signing.

According to various embodiments disclosed herein, enabling multi-signing for an APK file in a multi-party collaboration process may technically resolve disputes over program ownership and reduce unnecessary procedures such as moving the APK file between multiple parties.

In addition, according to various embodiments, providing a realistic and flexible multi-signing mechanism in the current Android ecosystem that does not support multi-signing may technically resolve situations where the ownership or liability issue occurs in a multi-party collaborative project.

An electronic device according to an embodiment includes a processor, and a memory including at least one instruction executable by the processor, wherein in response to the at least one instruction being executed by the processor, the processor may be configured to receive an Android Package (APK) file for which multi-signing is requested, verify a signing block included in the APK file, determine a new signing block to be added to the APK file according to the multi-signing when the verifying of the signing block is completed, reconstruct the APK file based on the new signing block, and insert the new signing block into the reconstructed APK file.

An electronic device according to an embodiment includes a processor, and a memory including at least one instruction executable by the processor, wherein in response to the at least one instruction being executed by the processor, the processor may be configured to receive an APK file to be installed on the electronic device, determine whether the APK file is multi-signed based on a signing block included in the APK file, obtain an old signing block by disassembling the APK file when it is determined the APK file is multi-signed, verify the disassembled APK file based on the old signing block, and install the APK file on the electronic device when the verifying of the disassembled APK file is completed.

An operation method of an electronic device according to an embodiment includes receiving an APK file for which multi-signing is requested, verifying a signing block included in the APK file, determining a new signing block to be added to the APK file according to the multi-signing when the verifying of the signing block is completed, reconstructing the APK file based on the new signing block, and inserting the new signing block into the reconstructed APK file.

### Effects

According to various embodiments, it is possible to assemble areas included in an APK file into one area and add a new signing block, thereby maintaining the ZIP file format while including a plurality of signing blocks for multi-signing in the APK file.

Further, according to various embodiments disclosed herein, enabling multi-signing for an APK file in a multi-party collaboration process may technically resolve disputes over program ownership and reduce unnecessary procedures such as moving the APK file between multiple parties.

Further, according to various embodiments, providing a realistic and flexible multi-signing mechanism in the current Android ecosystem that does not support multi-signing may technically resolve situations where the ownership or liability issue occurs in a multi-party collaborative project.

In addition, various effects directly or indirectly ascertained through the present disclosure may be provided.

### Brief Description of Drawings

FIG. 1 is a block diagram illustrating an electronic device in a network environment according to various embodiments.
FIG. 2 is a block diagram illustrating a program according to various embodiments.
FIG. 3 is a diagram illustrating an Android Package (APK) file according to an embodiment.
FIG. 4 is a diagram illustrating an operation of reconstructing an APK file according to an embodiment.
FIGS. 5 and 6 are diagrams illustrating a client-side operation according to an embodiment.
FIGS. 7 and 8 are diagrams illustrating a device-side operation according to an embodiment.
FIG. 9 is a diagram illustrating an electronic device according to an embodiment.
FIGS. 10 and 11 are flowcharts illustrating operation methods of an electronic device according to an embodiment.

### Best Mode for Carrying Out the Invention

Hereinafter, embodiments will be described in detail with reference to the accompanying drawings. When describing the embodiments with reference to the accompanying drawings, like reference numerals refer to like elements and any repeated description related thereto will be omitted.

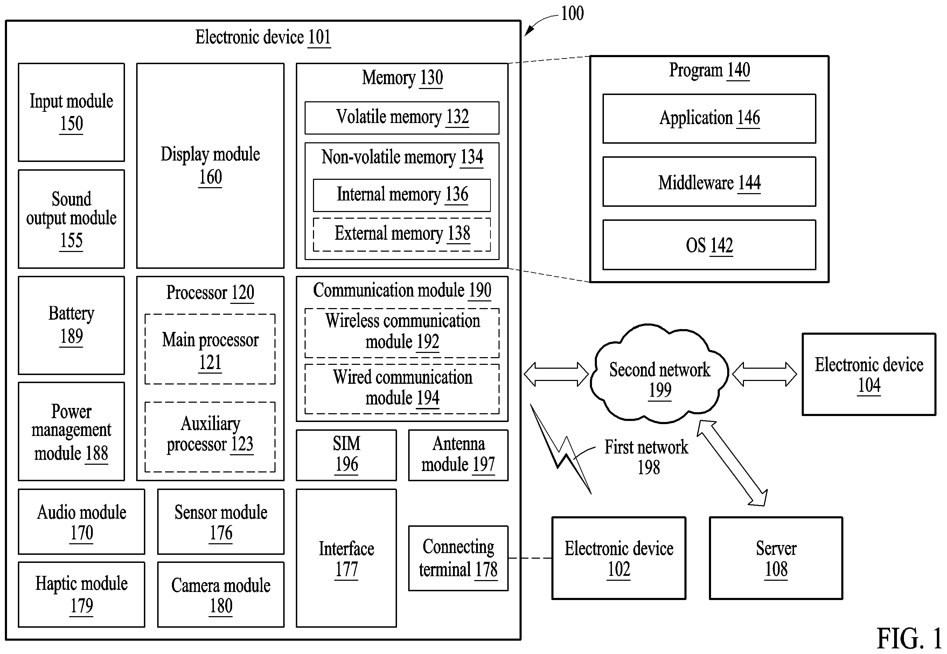

FIG. 1 is a block diagram illustrating an electronic device in a network environment according to various embodiments.

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or communicate with at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be integrated as a single component (e.g., the display module 160).

The processor 120 may execute, for example, software (e.g., a program 140) to control at least one other component (e.g., a hardware or software component) of the electronic device 101 connected to the processor 120, and may perform various data processing or computation. According to an embodiment, as at least a part of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a portion of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specified for processing of an artificial intelligence (AI) model. The AI model may be generated by machine learning. Such learning may be performed, for example, by the electronic device 101 in which an artificial intelligence model is executed, or via a separate server (e.g., the server 108). Learning algorithms may include, but are not limited to, for example, supervised learning, unsupervised learning, semisupervised learning, or reinforcement learning. The artificial intelligence model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), deep Q-network, or a combination of two or more thereof, but is not limited thereto. The artificial intelligence model may, additionally or alternatively, include a software structure other than the hardware structure.

The memory 130 may store various pieces of data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134.

The program 140 may be stored as software in the memory 130, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing record. The receiver may be used to receive an incoming call. According to an embodiment, the receiver may be implemented separately from the speaker or as a part of the speaker.

The display module 160 may visually provide information to the outside (e.g., a user) of the electronic device 101. The display module 160 may include, for example, a display, a hologram device, or a projector and control circuitry to control a corresponding one of the display, the hologram device, and the projector. According to an embodiment, the display module 160 may include a touch sensor adapted to detect a touch, or a pressure sensor adapted to measure the intensity of force incurred by the touch.

The audio module 170 may convert a sound into an electrical signal or vice versa. According to an embodiment, the audio module 170 may obtain the sound via the input module 150, or output the sound via the sound output module 155 or an external electronic device (e.g., the electronic device 102 such as a speaker or a headphone) directly or wirelessly connected to the electronic device 101.

The sensor module 176 may detect an operational state (e.g., power or temperature) of the electronic device 101 or an environmental state (e.g., a state of a user) external to the electronic device 101, and generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electric signal into a mechanical stimulus (e.g., a vibration or a movement) or an electrical stimulus which may be recognized by a user via his or her tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, image signal processors, or flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently of the processor 120 (e.g., an AP) and that support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN))). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and a next-generation communication technology, e.g., a new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), an array antenna, analog beamforming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or the power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to embodiments, the antenna module 197 may form a mmWave antenna module. According to an embodiment, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of the same type as or a different type from the electronic device 101. According to an embodiment, all or some of operations to be executed by the electronic device 101 may be executed at one or more external electronic devices (e.g., the external devices 102 and 104, and the server 108). For example, if the electronic device 101 needs to perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., a smart home, a smart city, a smart car, or healthcare) based on 5G communication technology or IoT-related technology.

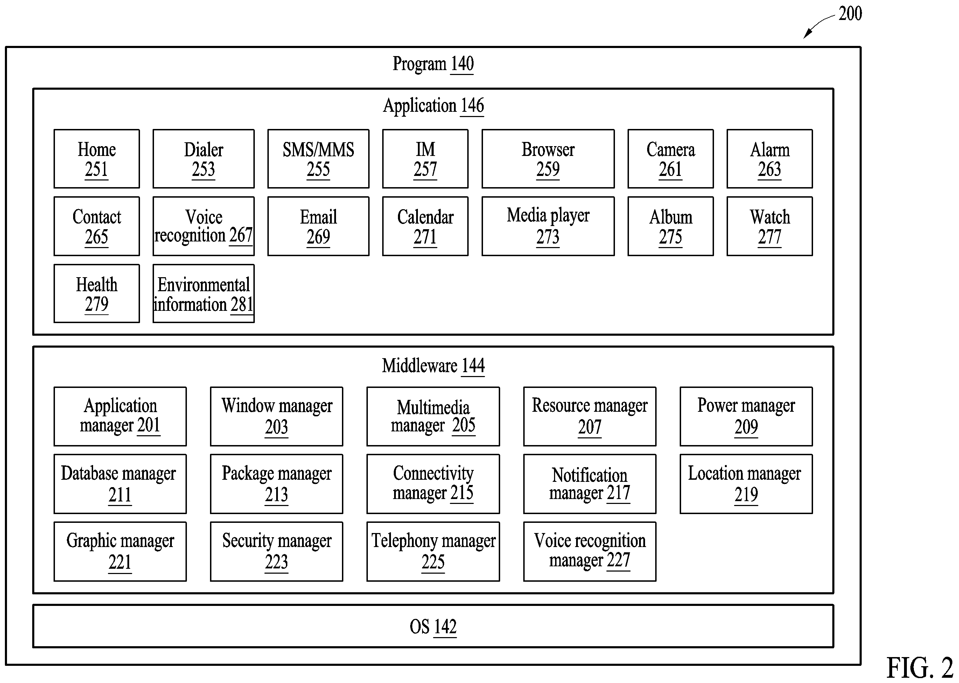

FIG. 2 is a block diagram illustrating a program according to various embodiments.

FIG. 2 is a block diagram 200 illustrating a program 140 according to various embodiments. According to an embodiment, the program 140 may include an OS 142 to control one or more resources of the electronic device 101, middleware 144, or an application 146 executable in the OS 142. The OS 142 may include, for example, Android^{™}, iOS^{™}, Windows^{™}, Symbian^{™}, Tizen^{™}, or Bada^{™}. At least part of the program 140, for example, may be pre-loaded on the electronic device 101 during manufacture, or may be downloaded from or updated by an external electronic device (e.g., the electronic device 102 or 104, or the server 108) during use by a user.

The OS 142 may control management (e.g., allocation or deallocation) of one or more system resources (e.g., a process, a memory, or a power source) of the electronic device 101. The OS 142 may additionally or alternatively include other one or more driver programs to drive other hardware devices of the electronic device 101, for example, the input module 150, the sound output module 155, the display module 160, the audio module 170, the sensor module 176, the interface 177, the haptic module 179, the camera module 180, the power management module 188, the battery 189, the communication module 190, the SIM 196, or the antenna module 197.

The middleware 144 may provide various functions to the application 146 such that a function or information provided from one or more resources of the electronic device 101 may be used by the application 146. The middleware 144 may include, for example, an application manager 201, a window manager 203, a multimedia manager 205, a resource manager 207, a power manager 209, a database (DB) manager 211, a package manager 213, a connectivity manager 215, a notification manager 217, a location manager 219, a graphic manager 221, a security manager 223, a telephony manager 225, or a voice recognition manager 227.

The application manager 201 may, for example, manage the life cycle of the application 146. The window manager 203, for example, may manage one or more graphical user interface (GUI) resources that are used on a screen. The multimedia manager 205, for example, may identify one or more formats to be used to play media files, and may encode or decode a corresponding one of the media files using a codec appropriate for a corresponding format selected from the one or more formats. The resource manager 207, for example, may manage the source code of the application 146 or a memory space of the memory 130. The power manager 209, for example, may manage the capacity, temperature, or power of the battery 189, and may determine or provide related information to be used for the operation of the electronic device 101 based at least in part on corresponding information of the capacity, temperature, or power of the battery 189. According to an embodiment, the power manager 209 may interwork with a basic input/output system (BIOS) (not shown) of the electronic device 101.

The DB manager 211, for example, may generate, search, or change a DB to be used by the application 146. The package manager 213, for example, may manage installation or update of an application that is distributed in the form of a package file. The connectivity manager 215, for example, may manage a wireless connection or a direct connection between the electronic device 101 and the external electronic device. The notification manager 217, for example, may provide a function to notify a user of an occurrence of a specified event (e.g., an incoming call, a message, or an alert). The location manager 219, for example, may manage location information on the electronic device 101. The graphic manager 221, for example, may manage one or more graphic effects to be offered to a user or a user interface related to the one or more graphic effects.

The security manager 223, for example, may provide system security or user authentication. The telephony manager 225, for example, may manage a voice call function or a video call function provided by the electronic device 101. The voice recognition manager 227, for example, may transmit user's voice data to the server 108, and may receive, from the server 108, a command corresponding to a function to be executed on the electronic device 101 based on at least in part on the voice data, or text data converted based at least in part on the voice data. According to an embodiment, the middleware 244 may dynamically delete some existing components or add new components. According to an embodiment, at least part of the middleware 144 may be included as part of the OS 142 or may be implemented as another software separate from the OS 142.

The application 146 may include, for example, a home 251, dialer 253, short message service (SMS)/multimedia messaging service (MMS) 255, instant message (IM) 257, browser 259, camera 261, alarm 263, contact 265, voice recognition 267, email 269, calendar 271, media player 273, album 275, watch 277, health 279 (e.g., for measuring the degree of workout or biometric information, such as blood sugar), or environmental information 281 (e.g., for measuring air pressure, humidity, or temperature information) application. According to an embodiment, the application 146 may further include an information exchanging application (not shown) that is capable of supporting information exchange between the electronic device 101 and an external electronic device. The information exchange application, for example, may include a notification relay application adapted to transfer designated information (e.g., a call, message, or alert) to the external electronic device or a device management application adapted to manage the external electronic device. The notification relay application may transfer notification information corresponding to an occurrence of a specified event (e.g., receipt of an email) at another application (e.g., the email application 269) of the electronic device 101 to the external electronic device. Additionally or alternatively, the notification relay application may receive notification information from the external electronic device and provide the notification information to a user of the electronic device 101.

The device management application may control the power (e.g., turn-on or turn-off) or the function (e.g., adjustment of brightness, resolution, or focus) of an external electronic device that communicates with the electronic device 101, or some component (e.g., a display module or a camera module of the external electronic device) of the external electronic device. The device management application may additionally or alternatively support the installation, deletion, or update of an application being operated on an external electronic device.

The electronic device according to various embodiments may be one of various types of electronic devices. The electronic device may include, for example, a portable communication device (e.g., a smartphone), a computer device, a portable multimedia device, a portable medical device, a camera, a wearable device, or a home appliance device. According to an embodiment of the disclosure, the electronic device is not limited to those described above.

It should be appreciated that various embodiments of the present disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things, unless the relevant context clearly indicates otherwise. As used herein, "A or B", "at least one of A and B", "at least one of A or B", "A, B or C", "at least one of A, B and C", and "at least one of A, B, or C", each of which may include any one of the items listed together in the corresponding one of the phrases, or all possible combinations thereof. Terms such as "first", "second", or "first" or "second" may simply be used to distinguish the component from other components in question, and do not limit the components in other aspects (e.g., importance or order). It is to be understood that if a component (e.g., a first component) is referred to, with or without the term "operatively" or "communicatively", as "coupled with," "coupled to," "connected with," or "connected to" another component (e.g., a second component), the component may be coupled with the other component directly (e.g., by wire), wirelessly, or via a third component.

As used in connection with embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., the internal memory 136 or the external memory 138) that is readable by a machine (e.g., the electronic device 101) For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smartphones) directly. If distributed online, at least portion of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

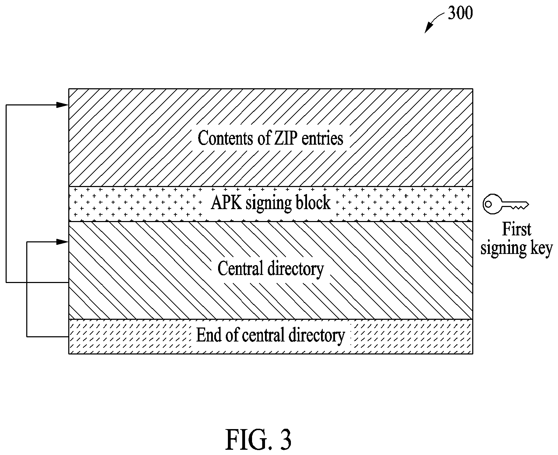

FIG. 3 is a diagram illustrating an Android Package (APK) file according to an embodiment.

Referring to FIG. 3, an APK file 300 may include contents of ZIP entries, an APK signing block, a central directory, and an end of central directory. The APK file 300 may be installed in an electronic device (e.g., the electronic device 101 of FIG. 1).

The contents of ZIP entries may include compressed data records of individual files included in a ZIP file. The central directory may include information about an offset in which the compressed data records of each file are located within the contents of ZIP entries. The end of central directory may include the location of the central directory and other information. Here, the other information may include the number of records stored in the central directory, the size of the central directory, and/or comment information.

The structure of the APK file 300 may have the form of a linked list in which information in the central directory is identified at the end of central directory, and data records in the contents of ZIP entries are sought based on the identified information. A method of signing the APK file 300 may place an APK signing block between the contents of ZIP entries and the central directory using the ZIP file format.

The APK signing block may be generated through a first signing key based on three areas including the contents of ZIP entries, the central directory, and the end of central directory, and may ensure the integrity of the APK file 300 itself. The owner of the APK file 300 and/or the person in charge may be determined through a signing operation based on the first signing key. A signing key may be a data element limited to one predetermined entity (e.g., a signing entity) and security information set to be used by only the entity in a signing process, and may include, for example, a private key. In various embodiments of the present specification, an APK signing block may also be referred to as a signing block for ease of description.

Since the offset of the central directory and the end of central directory changes in the operation of including the APK signing block in the APK file 300, the electronic device may calculate the size of the APK signing block in advance before generating the APK signing block and determine a hash value with respect to the central directory and the end of central directory for the new offset.

If the APK file 300 is determined through multi-party collaboration, multi-signing may be used. Multi-signing may be a case where a plurality of signing entities sign the APK file 300, and signing blocks for the respective signing entities may be included in the APK file 300. However, in the current Android system, only a single signing block may be included in the APK file 300, and since areas of the APK file 300 are linked in the form of a linked list, a new APK multi-signing method that may support multi-signing of the APK file 300 may be applied, which will be described in detail with reference to the drawings. The APK multi-signing method may technically resolve disputes over the ownership of a program by enabling multi-signing for the APK file 300 in the multi-party collaboration process, and may reduce unnecessary procedures such as moving the APK file 300 between multiple parties.

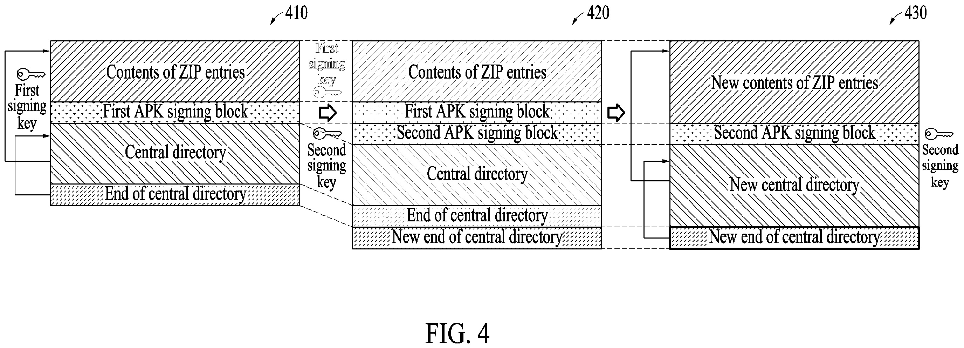

FIG. 4 is a diagram illustrating an operation of reconstructing an APK file according to an embodiment.

Referring to FIG. 4, an example of determining a reconstructed APK file 430 by applying multi-signing to an APK file 410 (e.g., the APK file 300 of FIG. 3) is shown. In FIG. 4, for ease of description, an example of applying multi-signing based on two signing keys (e.g., a first signing key and a second signing key) is shown. However, in addition, the description of various embodiments in this specification may apply to any other multi-signing based on a plurality of signing keys without limitation.

The APK file 410 may be an APK file with single-signing applied. The first APK signing block may be determined by a signing operation based on a first signing key to ensure the integrity of the APK file 410. The first signing key may correspond to a first signing entity.

For multi-signing, a second APK signing block based on a second signing key may be added to the APK file 420. The second signing key may correspond to a second signing entity that is different from the first signing entity. The second APK signing block may be located between the first APK signing block and a central directory in the APK file 420. An operation of separating the first APK signing block and the central directory based on the size of the second APK signing block may be performed before an operation of including the second APK signing block in the APK file 420. Additionally, a new end of central directory including the location of new central directory and other information of the reconstructed APK file 430 may be generated and located after the end of central directory.

In the current Android system, a plurality of signing blocks (e.g., the first APK signing block and the second APK signing block) may not be included in the APK file 420, so an operation of reconstructing the APK file 420 may be performed. The contents of ZIP entries and the first APK signing block in the APK file 420 may be determined to be new contents of ZIP entries, and the central directory and the end of central directory may be determined to be the new central directory.

The reconstructed APK file 430 may include the new contents of ZIP entries, the second APK signing block, the new central directory, and the new end of central directory, wherein the second APK signing block may be a block for ensuring the integrity of the reconstructed APK file 430 and may be generated through a signing operation by the second signing key. The reconstructed APK file 430 is a multi-signing file but formally includes only one signing block and thus, may operate appropriately in the current Android system.

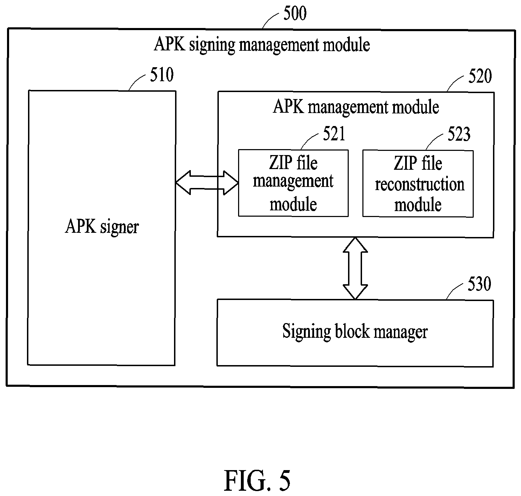

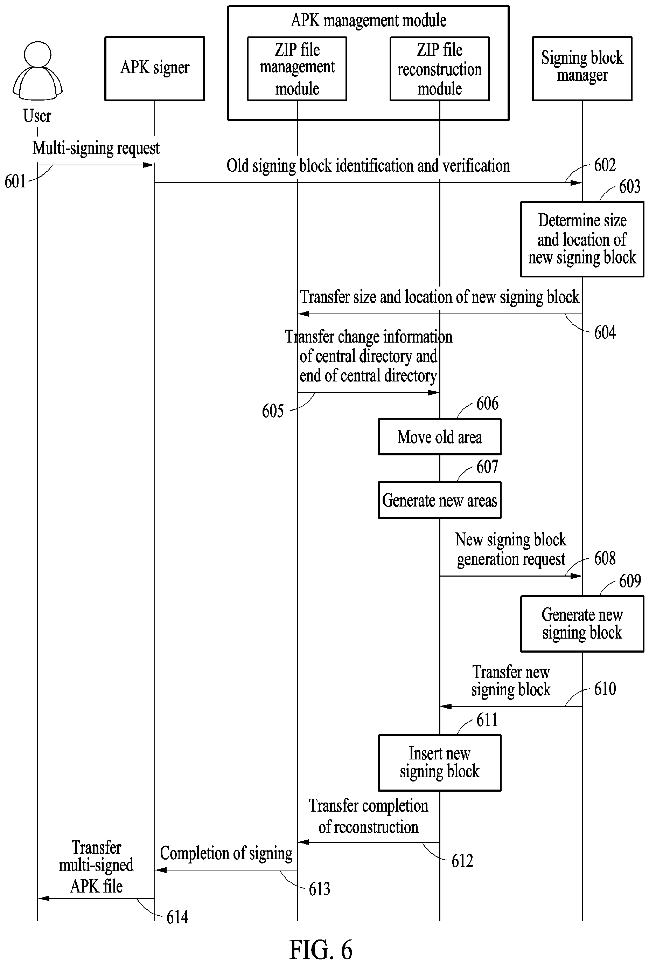

FIGS. 5 and 6 are diagrams illustrating a client-side operation according to an embodiment.

Referring to FIG. 5, an APK signing management module 500 may include an APK signer 510, an APK management module 520, and a signing block manager 530. The APK signing management module 500 may be a tool for signing an APK file (e.g., the APK file 300 of FIG. 3 and the APK file 410 or the reconstructed APK file 430 of FIG. 4) and may operate on a client side. The APK signer 510 and a ZIP file management module 521 may be modules modified for multi-signing, and a ZIP file reconstruction module 523 and a signing block manager 530 may be new modules included in the APK signing management module 500 for multi-signing.

The APK signing management module 500 may process an input (e.g., a multi-signing request) from a user, prepare options, and/or control a library required for signing when signing an APK file. Here, the options may include whether it is single-signing or multi-signing, and/or the proportion of authority of each signature in the case of multi-signing.

The APK management module 520 may be a module that collects utility functions required for APK files, and may include the ZIP file management module 521 and the ZIP file reconstruction module 523. For example, the APK management module 520 may process a ZIP file, apply an ASN.1 format, and/or process a file input/output.

The ZIP file management module 521 may perform overall processing operations for ZIP files. As described above with reference to FIG. 4, the ZIP file management module 521 may support, for multi-signing, an operation of determining contents of ZIP entries and a signing block to be new contents of ZIP entries and determining a central directory and an end of central directory to be a new central directory.

The ZIP file reconstruction module 523 may reconstruct the APK file. For example, the ZIP file reconstruction module 523 may readjust the range of each area like the operation of determining contents of ZIP entries and a signing block to be new contents of ZIP entries and determining a central directory and an end of central directory to be a new central directory.

The signing block manager 530 may manage signing blocks according to multi-signing. In the case of multi-signing, since signing blocks increase as many as signing keys, the signing block manager 530 may be needed to manage the plurality of signing blocks. The signing block manager 530 may generate space in the APK file to include a new signing block therein, identify whether an old signing block is present, or manage information necessary for integrity determination.

Referring to FIG. 6, a client-side operation of an electronic device (e.g., the electronic device 101 of FIG. 1) according to an embodiment is exemplarily shown.

In the following embodiments, operations may be performed sequentially, but are not necessarily performed sequentially. For example, the operations may be performed in different orders, and at least two of the operations may be performed in parallel. Operations 601 to 614 may be performed by at least one component (e.g., the processor 120 of FIG. 1) of the electronic device. The electronic device may include the APK signing management module 500 shown in FIG. 5.

In operation 601, an APK signer (e.g., the APK signer 510 of FIG. 5) may receive a multi-signing request from a user. For example, the multi-signing request may include an APK file (e.g., the APK file 300 of FIG. 3 and the APK file 410 or the reconstructed APK file 430 of FIG. 4) to be multi-signed and signing information to be added by multi-signing.

In operation 602, the APK signer may identify whether an old signing block is present in the APK file based on the multi-signing request, and if present, may request a signing block manager (e.g., the signing block manager 530 of FIG. 5) to verify the corresponding signing block. The signing block manager may identify whether an old signing block (e.g., the first APK signing block of FIG. 4) is present in the APK file. If an old signing block is present, the signing block manager may verify the integrity of the APK file based on the old signing block.

In operation 603, the signing block manager may determine the size and location of a new signing block when the integrity of the APK file is verified. For example, the signing block manager may determine the size of a new signing block to be generated (e.g., the second APK signing block of FIG. 4) based on the signing information to be added, and determine the location at which the new signing block is to be disposed in the APK file. The signing block manager may determine that the location of the new signing block is to be between the old signing block and a central directory.

In operation 604, the signing block manager may transfer the information about the size and location of the new signing block to a ZIP file management module (e.g., the ZIP file management module 521 of FIG. 5).

In operation 605, the ZIP file management module may transfer change information of the central directory and an end of central directory of the APK file to a ZIP file reconstruction module (e.g., the ZIP file reconstruction module 523 of FIG. 5). The change information may include offset information to be changed for each of the central directory and the end of central directory. Additionally, depending on the embodiment, information about the central directory and the end of central directory of the current APK file may also be transferred from the ZIP file management module to the ZIP file reconstruction module.

In operation 606, the ZIP file reconstruction module may reconstruct the APK file based on the received information. For example, the ZIP file reconstruction module may move the central directory and the end of central directory according to the change information.

In operation 607, the ZIP file reconstruction module may generate new areas by setting the moved central directory and end of central directory as a new central directory, setting the contents of ZIP entries and the old signing block as new contents of ZIP entries, generating a new end of central directory, and disposing the new end of central directory after the new central directory. The APK file reconstructed by the ZIP file reconstruction module may have a ZIP file format.

In operation 608, the ZIP file reconstruction module may transfer a new signing block generation request to the signing block manager.

In operation 609, the signing block manager may generate a new signing block. The new signing block is intended to ensure the integrity of the reconstructed APK file, and may be generated through a signing key to be added according to the multi-signing request.

In operation 610, the signing block manager may transfer the new signing block to the ZIP file reconstruction module.

In operation 611, the ZIP file reconstruction module may insert the new signing block into the reconstructed APK file. For example, the ZIP file reconstruction module may insert the new signing block between the new contents of ZIP entries and the new central directory in the reconstructed APK file.

In operation 612, the ZIP file reconstruction module may transfer a message indicating that the reconstruction is completed to the ZIP file management module.

In operation 613, the ZIP file management module may transfer a message indicating that the signing is completed to the APK signer based on a reconstruction complete message.

In operation 614, the APK signer may transfer the multi-signed APK file to the user.

According to an embodiment, an operation method of an electronic device may include receiving an APK file for which multi-signing is requested, verifying a signing block included in the APK file, determining a new signing block to be added to the APK file according to the multi-signing when the verifying of the signing block is completed, reconstructing the APK file based on the new signing block, and inserting the new signing block into the reconstructed APK file.

According to an embodiment, in the operation method of the electronic device, the reconstructing may include separating the signing block and a central directory in the APK file based on the size of the new signing block, determining the signing block and contents of ZIP entries included in the APK file to be new contents of ZIP entries, and determining the central directory and an end of central directory included in the APK file to be a new central directory.

According to an embodiment, in the operation method of the electronic device, the inserting of the new signing block may include inserting the new signing block between the new contents of ZIP entries and the new central directory.

According to an embodiment, in the operation method of the electronic device, the reconstructing may include generating a new end of central directory including location information of the new central directory, and including the new end of central directory in the reconstructed APK file.

According to an embodiment, in the operation method of the electronic device, the determining of the new signing block may include determining the size and location of the new signing block to be added to the APK file according to the multi-signing.

According to an embodiment, in the operation method of the electronic device, the signing block may be a block included in the APK file to ensure the integrity of the APK file and may correspond to a first signing key, and the new signing block may be a block included in the reconstructed APK file to ensure the integrity of the reconstructed APK file and may correspond to a second signing key different from the first signing key.

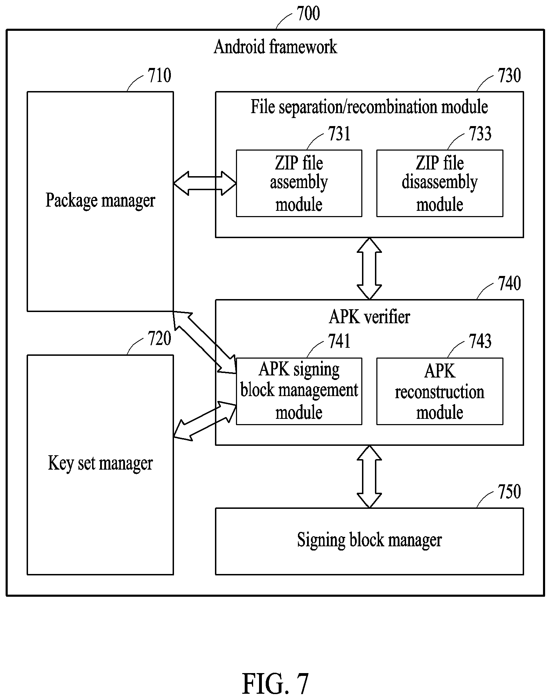

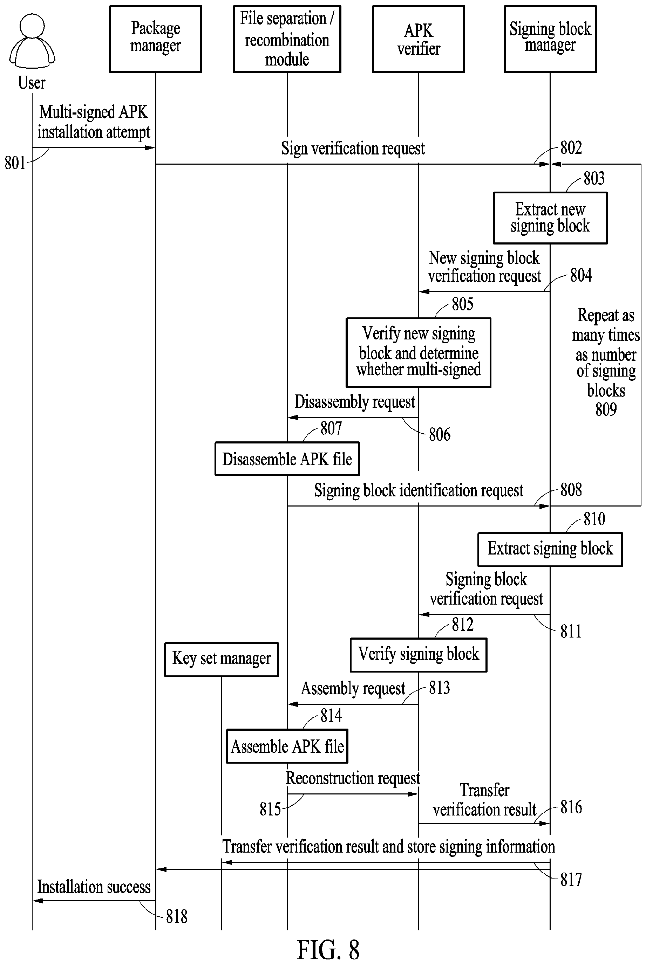

FIGS. 7 and 8 are diagrams illustrating a device-side operation of an electronic device (e.g., the electronic device 101 of FIG. 1) according to an embodiment.

Referring to FIG. 7, an Android framework 700 may include a package manager 710 (e.g., the package manager 213 of FIG. 2), a key set manager 720, a file separation/recombination module 730, an APK verifier 740, and a signing block manager 750. The Android framework 700 is intended to support an APK file (e.g., the APK file 300 of FIG. 3 and the APK file 410 or the reconstructed APK file 430 of FIG. 4) to be installed on an electronic device (e.g., the electronic device 101 of FIG. 1), and may operate on a device side. The package manager 710, the key set manager 720, and an APK signing block management module 741 may be modules modified for multi-signing, and a ZIP file assembly module 731, a ZIP file disassembly module 733, an APK reconstruction module 743, and the signing block manager 750 may be new modules included in the Android framework 700 for multi-signing.

The package manager 710 may manage information about APK files installed on the electronic device, and may register or remove information about an APK file when the APK file is installed on or deleted from the electronic device. Information on multi-signing described in various embodiments of this specification may also be managed and/or stored by the package manager 710.

The key set manager 720 may manage signing information of the APK files installed on the electronic device. The key set manager 720 may manage multi-signing information through a new database.

The ZIP file assembly module 731 may reassemble areas of the APK file disassembled by the ZIP file disassembly module 733, which will be described later. Additionally, the ZIP file assembly module 731 may also examine whether the APK file matches the old APK file.

The ZIP file disassembly module 733 may disassemble the multi-signed APK file to verify the old signing block included in the multi-signed APK file. For example, the ZIP file disassembly module 733 may disassemble the multi-signed APK file so that the APK file may be transferred to a virtual machine environment operating on the electronic device.

The APK signing block management module 741 may transfer items of data added for multi-signing to the package manager 710 and the key set manager 720.

Unlike the ZIP file assembly module 731 described above, the APK reconstruction module 743 may sequentially verify signing blocks while disassembling the format of the multi-signed APK file, to install the multi-signed APK file on the electronic device. Further, the APK reconstruction module 743 may reconstruct the APK file to sequentially verify the signing blocks. In addition, the APK reconstruction module 743 may perform an operation of reconstructing the original APK file when the sequential verification of the signing blocks is completed.

The signing block manager 750 may manage the signing blocks according to multi-signings in the same manner as described with reference to FIG. 5. The signing block manager 750 may provide information on the managed signing blocks for verification performed when installing the APK file.

Referring to FIG. 8, a device-side operation of an electronic device (e.g., the electronic device 101 of FIG. 1) according to an embodiment is exemplarily shown.

In the following embodiments, operations may be performed sequentially, but are not necessarily performed sequentially. For example, the operations may be performed in different orders, and at least two of the operations may be performed in parallel. Operations 801 to 818 may be performed by at least one component (e.g., the processor 120 of FIG. 1) of the electronic device. The electronic device may include the Android framework 700 shown in FIG. 7.

In operation 801, a package manager (e.g., the package manager 710 of FIG. 7) may receive an APK file (e.g., the APK file 300 of FIG. 3 and the APK file 410 or the reconstructed APK file 430 of FIG. 4) installation request from a user. For example, the APK file may be a file multi-signed based on a plurality of signing keys.

In operation 802, the package manager may transmit a signature verification request for the APK file to a signing block manager (e.g., the signing block manager 750 of FIG. 7).

In operation 803, the signing block manager may extract a new signing block included in the APK file. For example, the APK file may correspond to the reconstructed APK file 430 of FIG. 5, and the new signing block may correspond to the second APK signing block of FIG. 4.

In operation 804, the signing block manager may transfer the new signing block to an APK verifier (e.g., the APK verifier 740 of FIG. 7).

In operation 805, the APK verifier may verify the new signing block. For example, the APK verifier may verify the integrity of the APK file based on the new signing block. When the verification of the new signing block is completed, the APK verifier may determine whether the APK file is multi-signed. For example, the APK verifier may search the APK file to determine whether there is a unique magic number (or a magic value), determine that there is a signing block corresponding to a unique magic number when there is a unique magic number, and verify the corresponding signing block, thereby determining whether the APK file is multi-signed. In response to the APK file being multi-signed, operation 806 may be performed subsequently.

In operation 806, the APK verifier may transmit a disassembly request for the APK file to a file separation/recombination module (e.g., the file separation/recombination module 730 of FIG. 7).

In operation 807, the file separation/recombination module may disassemble the APK file. For example, the file separation/recombination module (e.g., the ZIP file disassembly module 733 of FIG. 7) may obtain contents of ZIP entries and a first APK signing block by disassembling new contents of ZIP entries, and obtain a central directory and an end of central directory by disassembling a new central directory.

In operation 808, the file separation/recombination module may transfer an identification request for a first APK signing block to the signing block manager.

In operation 809, operations 803 to 808 described above may be repeated as many times as the number of signing blocks included in the APK file. By repeating operations 803 to 808 as many times as the number of signing keys according to multi-signing, the verification of each signing block may be completed. When there is still a verification of the last signing block included in the APK file, operation 810 may be performed subsequently.

In operation 810, the signing block manager may extract the last signing block from the disassembled APK file. Here, the disassembled APK file may correspond to the APK file 410 of FIG. 4, and the last signing block may correspond to the first APK signing block of FIG. 4.

In operation 811, the signing block manager may transfer a verification request for the last signing block to the APK verifier.

In operation 812, the APK verifier may verify the last signing block. For example, the APK verifier may verify the integrity of the disassembled APK file based on the last signing block. When the verification of the last signing block is completed, operation 813 may be performed subsequently.

In operation 813, the APK verifier may transmit an assembly request for the disassembled APK file to the file separation/recombination module.

In operation 814, the file separation/recombination module may assemble the disassembled APK file. For example, the file separation/recombination module (e.g., the ZIP file assembly module 731 of FIG. 7) may determine assemble data about new areas (e.g., new contents of ZIP entries, a new central directory, and a new end of central directory), to assemble the disassembled APK file into the APK file requested to be installed.

In operation 815, the file separation/recombination module may transfer a reconstruction request to the APK verifier. For example, the reconfiguration request may include the determined assemble data about the new areas determined in operation 814.

In operation 816, the APK verifier may reconstruct the disassembled APK file into the APK file requested to be installed according to the reconstruction request. The APK verifier may verify the reconstructed APK file and, if no issues, transfer the verification result and signing information to the signing block manager. The signing information may include information about the plurality of signing keys used for multi-signing.

In operation 817, the signing block manager may transfer the verification result and signing information to the package manager and the key set manager (e.g., the key set manager 720 of FIG. 7). The package manager and the key set manager may store the received data.

In operation 818, the package manager may install the multi-signed APK file and transfer the results to the user.

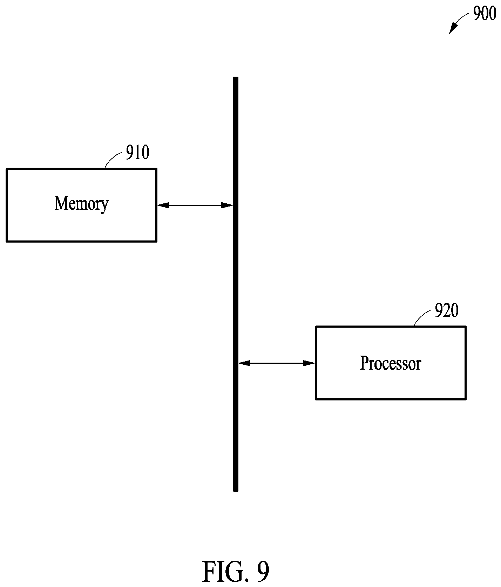

FIG. 9 is a diagram illustrating an electronic device according to an embodiment.

Referring to FIG. 9, an electronic device 900 (e.g., the electronic device 101 of FIG. 1) according to an embodiment may include a memory 910 (e.g., the memory 130 of FIG. 1) and a processor 920 (e.g., the processor 120 of FIG. 1).

The memory 910 may include computer-readable instructions. The processor 920 may perform the operations described above when the instructions stored in the memory 910 are executed by the processor 920. The memory 910 may include a volatile memory or a non-volatile memory. The processor 920 may be a device that executes instructions or programs or that controls the electronic device 900.

The electronic device 900 according to an embodiment may be implemented as a user terminal. The user terminal may include, for example, various computing devices such as a mobile phone, a smartphone, a tablet computer, a laptop, a PC, or an e-book device, various wearable devices such as a smart watch, smart eyeglasses, a head-mounted display (HMD), or smart clothes, various home appliances such as a smart speaker, a smart television (TV), or a smart refrigerator, and other devices such as a smart vehicle, a smart kiosk, an Internet of things (IoT) device, a walking assist device (WAD), a drone, or a robot.

The electronic device 900 may receive an APK file (e.g., the APK file 300 of FIG. 3 and the APK file 410 or the reconstructed APK file 430 of FIG. 4) for which multi-signing is requested, verify a signing block included in the APK file, determine a new signing block to be added to the APK file according to multi-signing when the verifying of the signing block is completed, reconstruct the APK file based on the new signing block, and insert the new signing block into the reconstructed APK file. Alternatively, the electronic device 900 may receive an APK file to be installed on the electronic device, determine whether the APK file is multi-signed based on a signing block included in the APK file, obtain an old signing block by disassembling the APK file when it is determined the APK file is multi-signed, verify the disassembled APK file based on the old signing block, and install the APK file on the electronic device when the verifying of the disassembled APK file is completed.

In addition, the electronic device 900 may process the operations described above.

According to an embodiment, an electronic device 900 may include a processor 20, and a memory 910 including at least one instruction executable by the processor, wherein in response to the at least one instruction being executed by the processor 920, the processor 920 may be configured to receive an APK file for which multi-signing is requested, verify a signing block included in the APK file, determine a new signing block to be added to the APK file according to the multi-signing when the verifying of the signing block is completed, reconstruct the APK file based on the new signing block, and insert the new signing block into the reconstructed APK file.

According to an embodiment, in the electronic device 900, the processor 920 may be further configured to separate the signing block and a central directory in the APK file based on the size of the new signing block, determine the signing block and contents of ZIP entries included in the APK file to be new contents of ZIP entries, and determine the central directory and an end of central directory included in the APK file to be a new central directory.

According to an embodiment, in the electronic device 900, the processor 920 may be further configured to insert the new signing block between the new contents of ZIP entries and the new central directory.

According to an embodiment, in the electronic device 900, the processor 920 may be further configured to generate a new end of central directory including location information of the new central directory and include the new end of central directory in the reconstructed APK file.

According to an embodiment, in the electronic device 900, the processor 920 may be further configured to determine the size and location of the new signing block to be added to the APK file according to the multi-signing.

According to an embodiment, in the electronic device 900, the signing block may be a block included in the APK file to ensure the integrity of the APK file and may correspond to a first signing key.

According to an embodiment, in the electronic device 900, the new signing block may be a block included in the reconstructed APK file to ensure the integrity of the reconstructed APK file and may correspond to a second signing key different from the first signing key.

According to an embodiment, an electronic device 900 may include a processor 20, and a memory 910 including at least one instruction executable by the processor, wherein in response to the at least one instruction being executed by the processor 920, the processor 920 may be configured to receive an APK file to be installed on the electronic device 900, determine whether the APK file is multi-signed based on a signing block included in the APK file, obtain an old signing block by disassembling the APK file when it is determined the APK file is multi-signed, verify the disassembled APK file based on the old signing block, and install the APK file on the electronic device 900 when the verifying of the disassembled APK file is completed.

According to an embodiment, in the electronic device 900, the processor 920 may be further configured to obtain old contents of ZIP entries and the old signing block by disassembling contents of ZIP entries included in the APK file, and obtain an old central directory and an old end of central directory by disassembling a central directory included in the APK file.

According to an embodiment, in the electronic device 900, the processor 920 may be further configured to verify the disassembled APK file including the old contents of ZIP entries, the old central directory, and the old end of central directory based on the old signing block.

According to an embodiment, in the electronic device 900, the signing block may be a block included in the APK file to ensure the integrity of the APK file and may correspond to a first signing key.

According to an embodiment, in the electronic device 900, the old signing block may be a block included in the disassembled APK file to ensure the integrity of the disassembled APK file and corresponds to a second signing key different from the first signing key.

According to an embodiment, in the electronic device 900, the processor 920 may be further configured to obtain the APK file by reassembling the disassembled APK file when the verifying of the disassembled APK file is completed and it is verified that there are no other signing blocks in the disassembled APK file.

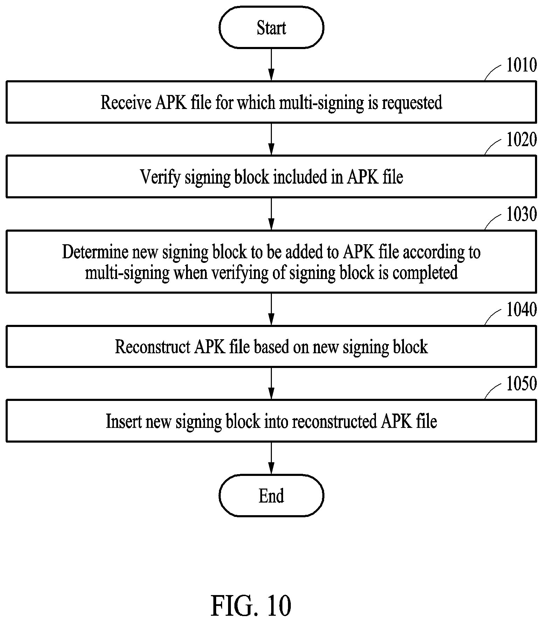

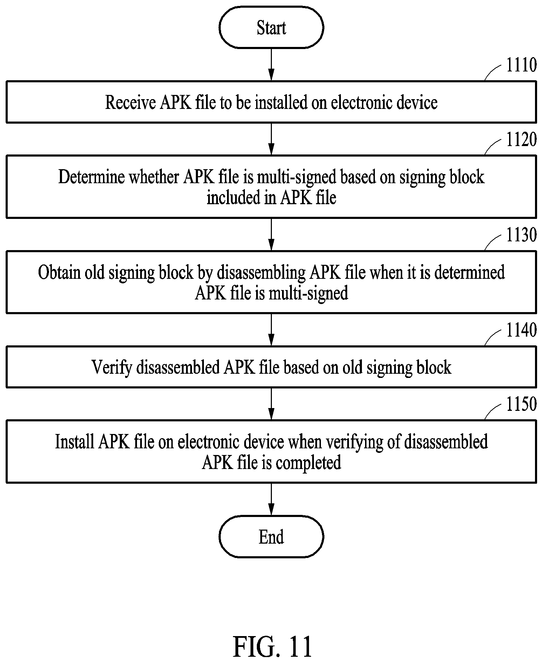

FIGS. 10 and 11 are flowcharts illustrating operation methods of an electronic device according to an embodiment.

Referring to FIG. 10, a client-side operation method of an electronic device (e.g., the electronic device 101 of FIG. 1 and the electronic device 900 of FIG. 9) is shown. In the following embodiments, operations may be performed sequentially, but are not necessarily performed sequentially. For example, the operations may be performed in different orders, and at least two of the operations may be performed in parallel. Operations 1010 to 1050 may be performed by at least one component (e.g., the processor 120 of FIG. 1 and the processor 920 of FIG. 9) of the electronic device.

In operation 1010, the electronic device may receive an APK file (e.g., the APK file 300 of FIG. 3 and the APK file 410 of FIG. 4) for which multi-signing is requested.

In operation 1020, the electronic device may verify a signing block (e.g., the first APK signing block of FIG. 4) included in the APK file. The signing block may be a block included in the APK file to ensure the integrity of the APK file, and may correspond to a first signing key (e.g., the first signing key of FIG. 4).

In operation 1030, the electronic device may determine a new signing block (e.g., the second APK signing block of FIG. 4) to be added to the APK file according to multi-signing when the verifying of the signing block is completed. For example, the electronic device may determine the size and location of the new signing block to be added to the APK file according to multi-signing.

In operation 1040, the electronic device may reconstruct the APK file based on the new signing block. For example, the electronic device may reconstruct the APK file by separating the signing block and a central directory (e.g., the central directory of FIG. 4) in the APK file based on the size of the new signing block, determining the signing block and contents of ZIP entries included in the APK file to be new contents of ZIP entries (e.g., the new contents of ZIP entries of FIG. 4), and determining the central directory and an end of central directory included in the APK file to be a new central directory (e.g., the new central directory of FIG. 4).

In operation 1050, the electronic device may insert the new signing block (e.g., the second APK signing block of FIG. 4) into the reconstructed APK file (e.g., the reconstructed APK file 430 of FIG. 4). For example, the electronic device may insert the new signing block between the new contents of ZIP entries and the new central directory.

The descriptions provided with reference to FIG. 1 to 9 may apply to the operations shown in FIG. 10, and thus a further detailed description thereof will be omitted.

Referring to FIG. 11, a device-side operation method of an electronic device (e.g., the electronic device 101 of FIG. 1 and the electronic device 900 of FIG. 9) is shown. In the following embodiments, operations may be performed sequentially, but are not necessarily performed sequentially. For example, the operations may be performed in different orders, and at least two of the operations may be performed in parallel. Operations 1110 to 1150 may be performed by at least one component (e.g., the processor 120 of FIG. 1 and the processor 920 of FIG. 9) of the electronic device.

In operation 1110, the electronic device may receive an APK file (e.g., the reconstructed APK file 430 of FIG. 4) to be installed on the electronic device.

In operation 1120, the electronic device may determine whether the APK file is multi-signed based on a signing block (e.g., the second APK signing block of FIG. 4) included in the APK file. The signing block may be a block included in the APK file to ensure the integrity of the APK file, and may correspond to a first signing key (e.g., the second signing key of FIG. 4).

In operation 1130, the electronic device may obtain an old signing block (e.g., the first APK signing block of FI'G. 4) by disassembling the APK file when it is determined the APK file is multi-signed. For example, the electronic device may obtain old contents of ZIP entries (e.g., the contents of ZIP entries of FIG. 4) and the old signing block by disassembling contents of ZIP entries (e.g., the new contents of ZIP entries of FIG. 4) included in the APK file, and obtain an old central directory (e.g., the central directory of FIG. 4) and an old end of central directory (e.g., the end of central directory of FIG. 4) by disassembling a central directory (e.g., the new central directory of FIG. 4) included in the APK file.

In operation 1140, the electronic device may verify the disassembled APK file (e.g., the APK file 300 of FIG. 3 and the APK file 410 of FIG. 4) based on the old signing block. For example, the electronic device may verify the disassembled APK file including the old contents of ZIP entries, the old central directory, and the old end of central directory based on the old signing block.

In operation 1150, the electronic device may install the APK file on the electronic device when the verifying of the disassembled APK file is completed.

The descriptions provided with reference to FIG. 1 to 9 may apply to the operations shown in FIG. 11, and thus a further detailed description thereof will be omitted.

The embodiments of the present disclosure disclosed in the specification and the drawings are merely presented to easily describe technical contents of various embodiments of the present disclosure and help the understanding of them and are not intended to limit the various embodiments. Therefore, all changes or modifications derived from the technical idea of the various embodiments of the present disclosure as well as the embodiments disclosed herein should be construed to fall within the various embodiments.

## Claims

1. An electronic device comprising:
a processor; and
a memory comprising at least one instruction executable by the processor,
wherein
in response to the at least one instruction being executed by the processor, the processor is configured to:
receive an Android Package (APK) file for which multi-signing is requested,
verify a signing block included in the APK file,
determine a new signing block to be added to the APK file according to the multi-signing when the verifying of the signing block is completed, reconstruct the APK file based on the new signing block, and
insert the new signing block into the reconstructed APK file.

2. The electronic device of claim 1, wherein
the processor is further configured to:
separate the signing block and a central directory in the APK file based on the size of the new signing block,
determine the signing block and contents of ZIP entries included in the APK file to be new contents of ZIP entries, and
determine the central directory and an end of central directory included in the APK file to be a new central directory.

3. The electronic device of claim 2, wherein
the processor is further configured to:
insert the new signing block between the new contents of ZIP entries and the new central directory.

4. The electronic device of claim 2, wherein
the processor is further configured to:
generate a new end of central directory comprising location information of the new central directory and include the new end of central directory in the reconstructed APK file.

5. The electronic device of claim 1, wherein
the processor is further configured to:
determine the size and location of the new signing block to be added to the APK file according to the multi-signing.

6. The electronic device of claim 1, wherein
the signing block is a block included in the APK file to ensure the integrity of the APK file and corresponds to a first signing key.

7. The electronic device of claim 6, wherein
the new signing block is a block included in the reconstructed APK file to ensure the integrity of the reconstructed APK file and corresponds to a second signing key different from the first signing key.

8. An electronic device comprising:
a processor; and
a memory comprising at least one instruction executable by the processor,
wherein
in response to the at least one instruction being executed by the processor, the processor is configured to:
receive an Android package (APK) file to be installed on the electronic device,
determine whether the APK file is multi-signed based on a signing block included in the APK file,
obtain an old signing block by disassembling the APK file when it is determined the APK file is multi-signed,
verify the disassembled APK file based on the old signing block, and
install the APK file on the electronic device when the verifying of the disassembled APK file is completed.

9. The electronic device of claim 8, wherein
the processor is further configured to:
obtain old contents of ZIP entries and the old signing block by disassembling contents of ZIP entries included in the APK file, and
obtain an old central directory and an old end of central directory by disassembling a central directory included in the APK file.

10. The electronic device of claim 9, wherein
the processor is further configured to:
verify the disassembled APK file comprising the old contents of ZIP entries, the old central directory, and the old end of central directory based on the old signing block.

11. The electronic device of claim 8, wherein
the signing block is a block included in the APK file to ensure the integrity of the APK file and corresponds to a first signing key.

12. The electronic device of claim 11, wherein
the old signing block is a block included in the disassembled APK file to ensure the integrity of the disassembled APK file and corresponds to a second signing key different from the first signing key.

13. The electronic device of claim 8, wherein
the processor is further configured to:
obtain the APK file by reassembling the disassembled APK file when the verifying of the disassembled APK file is completed and it is verified that there are no other signing blocks in the disassembled APK file.

14. An operation method of an electronic device, the operation method comprising:
receiving an Android Package (APK) file for which multi-signing is requested;
verifying a signing block included in the APK file;
determining a new signing block to be added to the APK file according to the multi-signing when the verifying of the signing block is completed;
reconstructing the APK file based on the new signing block; and
inserting the new signing block into the reconstructed APK file.

15. The operation method of claim 14, wherein
the reconstructing comprises:
separating the signing block and a central directory in the APK file based on the size of the new signing block;
determining the signing block and contents of ZIP entries included in the APK file to be new contents of ZIP entries; and
determining the central directory and an end of central directory included in the APK file to be a new central directory.
